# EUROPEAN PATENT SPECIFICATION

(11) **EP 3 762 200 B1**
(45) Date of publication and mention of the grant of the patent: **11.09.2024**
(21) Application number: 19764958.5
(22) Date of filing: 08.03.2019
(51) Int. Cl.: B29C 43/18, B29C 43/02, B62D 65/16, B60R 13/02, B60N 2/68, B29C 43/36, B29C 43/32, B29C 43/52, B29K 105/08, B29C 45/14, B29L 31/30

(54) **VEHICLE INTERIOR COMPONENT**
FAHRZEUGINNENKOMPONENTE
PIÈCE D'INTÉRIEUR DE VÉHICULE

(30) Priority: 08.03.2018 US 201862640331 P
(43) Date of publication of application: 13.01.2021
(73) Proprietor: Shanghai Yanfeng Jinqiao Automotive Trim Systems Co. Ltd, Novi, MI 48377 (US)
(72) Inventor: THIELHORN, Peter, 45479 Muelheim/Ruhr (DE); BECKER, Nils, 60486 Frankfurt (DE); KLUSMEIER, Werner, 32312 Lübbecke (DE)
(74) Representative: Meissner Bolte Partnerschaft mbB
(86) International application number: PCT/US2019/021407
(87) International publication number: WO 2019/173747

(56) References cited:
- WO-A1-2017/165294
- DE-A1- 10 017 354
- DE-C2- 3 890 321
- FR-A1- 2 627 127
- US-A- 6 165 404
- US-A1- 2006 275 586
- US-A1- 2009 321 002
- US-A1- 2015 321 449

## Description

### FIELD

The present invention relates to a component for a vehicle interior.

The present invention also relates to vehicle interior component prepared by a process to produce a panel assembly from a compression-formed structure formed from a pre-form substrate comprising a surface layer and a substrate layer.

### BACKGROUND

It is known to provide a vehicle interior component comprising a panel assembly with a substrate and a cover providing a surface effect.

It would be advantageous to provide an improved vehicle interior component such as a panel assembly comprising a substrate formed from a surface layer and a substrate layer and with a cover with the surface effect for the panel assembly generally provided by the substrate and cover.

### SUMMARY

The present invention is defined by the method of claim 1. Claim 13 addresses a related product and further embodiments are set out in the dependent claims. The present invention relates to a vehicle interior component produced in a mold comprising a first surface and a second surface by a process comprising placing a pre-form substrate onto the first surface of the mold; forming a compression-formed structure from the pre-form substrate by compressing the pre-form substrate between the first surface of the mold and the second surface of the mold; applying a cover to the compression-formed structure to form a panel assembly providing a surface effect. The cover may comprise the exterior surface of the panel assembly providing at least partially the surface effect of the panel assembly. The pre-form substrate may comprise a substrate layer and a surface layer. The compression-formed structure may comprise the substrate layer and the surface layer. The surface effect of the panel assembly may be at least partially provided by a surface effect of the surface layer of the compression-formed structure. The surface effect of the panel assembly may be at least partially provided by a surface effect of the surface layer of the pre-form substrate. The surface layer of the pre-form substrate may comprise a surface effect comprising a generally smooth texture. The surface layer of the compression-formed structure may comprise a surface effect comprising a generally smooth texture. The substrate layer for the pre-form substrate may comprise a surface effect comprising a generally rough texture. The pre-form substrate may comprise a surface effect comprising the surface effect of the surface layer. The compression-formed structure may comprise a surface effect comprising the surface effect of the surface layer. The step of forming the compression-formed structure may comprise forming the compression-formed structure with a surface effect generally comprising the surface effect of the pre-form substrate. The surface effect of the panel assembly may generally comprise the surface effect of the surface layer of the compression-formed structure. The surface effect of the panel assembly may generally comprise a surface effect of the surface layer of the compression-formed structure and a surface effect of the cover of the panel assembly. The substrate layer for the pre-form substrate may comprise a fiber mat. The substrate layer in the compression-formed structure may comprise a generally rigid fiber mat. The step of forming the compression-formed structure may comprise forming the substrate layer into a generally rigid form. The surface effect of the panel assembly may comprise the generally rigid form of the compression-formed structure. The surface effect of the panel assembly may comprise the generally rigid form of the substrate layer of the compression-formed structure. The surface effect of the panel assembly may comprise a generally smooth texture and a generally rigid form. The generally smooth texture of the panel assembly may be provided by (a) a surface effect of the cover and (b) a surface effect of the surface layer of the compression-formed structure formed from the pre-form substrate. The generally rigid form of the panel assembly may be provided by the substrate layer of the compression-formed structure formed from the pre-form substrate. The surface effect of the panel assembly may comprise a generally smooth surface effect of the surface layer of the compression-formed structure rather than a generally rough surface effect of the substrate layer for the pre-form substrate. The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The compression-formed structure may comprise a shape. The panel assembly may comprise at least partially the shape of the compression-formed structure. The shape may comprise a first contour provided by the first surface of the mold and a second contour provided by the second surface of the mold. The substrate layer for the pre-form substrate may comprise a fiber mat. The surface layer for the pre-form substrate may comprise at least one of a fabric material or a fleece material. The surface layer of the pre-form substrate may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material; (k) a resin-based material; (l) a polymer material; (m) polypropylene; (n) polyester. The process may further comprise the step of forming the pre-form substrate from a fiber mat. The process may further comprise the step of forming the pre-form substrate from a fiber mat and a fabric layer. The pre-form substrate may comprise a top layer and a structural layer; the top layer may comprise the surface layer and the structural layer may comprise the substrate layer. The vehicle interior component may further comprise the step of forming the pre-form substrate. The step of forming the pre-form substrate may comprise forming an interface between the surface layer and the substrate layer so that the surface effect of the pre-form substrate may comprise the surface effect of the surface layer. The step of forming the pre-form substrate may comprise forming an interface between the surface layer and the substrate layer so that the surface effect of the pre-form substrate may comprise a generally smooth surface effect of the surface layer rather than a generally rough surface effect of the substrate layer. Forming the interface between the surface layer and the substrate layer may comprise at least partial melting of the substrate layer into the surface layer. The process may further comprise the step of forming the pre-form substrate from a substrate layer and a surface layer. The step of forming the pre-form substrate may comprise applying the surface layer to the substrate layer. The substrate layer for the pre-form substrate may comprise a generally compressible fiber mat. The substrate layer in the compression-formed structure may comprise a generally rigid fiber mat. The step of forming the pre-form substrate may comprise consolidating the surface layer and the substrate layer. The step of forming the pre-form substrate may comprise consolidating the surface layer and the substrate layer into a generally rigid form. The step of forming the compression-formed structure may comprise forming the substrate layer into a generally rigid form. The process may further comprise the step of removing the compression-formed structure from the mold before applying the cover. The surface layer may be configured to provide improved profile tolerance for the panel assembly. The substrate layer may comprise natural fibers and a resin and the surface layer may comprise polypropylene and polyester. The resin may comprise polypropylene and the natural fibers comprise at least one of (a) flax; (b) kenaf. The surface layer may comprise at least one of (a) a non-woven fabric; (b) a synthetic fabric; (c) a thermoplastic fabric; (d) a non-woven fiber fabric. The pre-form substrate may comprise an area weight of between 1000 grams per square meter and 1800 grams per square meter. The surface comprises an area weight of between 200 grams per square meter and 300 grams per square meter. The pre-form substrate may comprise a thickness of between 1.5 mm and 4 mm and the compression-formed structure may comprise a thickness of between 0.8 mm and 3 mm. The pre-form substrate may comprise a pre-formed component; the process may further comprise the step of consolidating the surface layer and the substrate layer to form the pre-formed component. The process may comprise the step of heating the pre-formed component; the pre-formed component may be compressed as the pre-formed component cools. The process may comprise the step of injecting resin into the mold after the compression-formed component is formed to form an ancillary component of the panel assembly. The process may comprise the steps of activating the surface layer of the pre-formed component and adhering the cover to the surface layer of the pre-formed component.

The present invention relates to a vehicle interior component comprising a compression-formed structure formed from a pre-form substrate comprising a surface layer and a substrate layer; and a cover applied to the compression-formed structure to form a panel assembly providing a surface effect. The cover may comprise the exterior surface of the panel assembly. The surface effect of the panel assembly may generally comprise a surface effect of the surface layer of the compression-formed structure and a surface effect of the cover of the panel assembly. The surface layer of the pre-form substrate may comprise a surface effect comprising a generally smooth texture. The surface layer of the compression-formed structure may comprise a surface effect comprising a generally smooth texture. The substrate layer for the pre-form substrate may comprise a surface effect comprising a generally rough texture. The surface effect of the panel assembly may generally comprise the surface effect of the surface layer of the compression-formed structure. The substrate layer for the pre-form substrate may comprise a fiber mat. The substrate layer in the compression-formed structure may comprise a generally rigid fiber mat. The compression-formed structure may comprise a generally rigid form. The surface effect of the panel assembly may comprise the generally rigid form of the compression-formed structure. The surface effect of the panel assembly may comprise a generally rigid form of the substrate layer of the compression-formed structure. The surface effect of the panel assembly may comprise a generally smooth texture and a generally rigid form. The generally smooth texture of the panel assembly may be provided by (a) the surface effect of the cover and (b) the surface effect of the surface layer of the compression-formed structure formed from the pre-form substrate. The generally rigid form of the panel assembly may be provided by the substrate layer of the compression-formed structure formed from the pre-form substrate. The surface effect of the panel assembly may comprise a generally smooth surface effect of the surface layer of the compression-formed structure rather than a generally rough surface effect of the substrate layer for the pre-form substrate. The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The compression-formed structure may comprise a shape. The panel assembly may at least partially comprise the shape of the compression-formed structure. The substrate layer for the pre-form substrate may comprise a fiber mat. The substrate layer for the pre-form substrate may comprise a generally flexible fiber mat. The substrate layer of the compression-formed structure may comprise a generally rigid fiber mat. The surface layer for the pre-form substrate may comprise at least one of a fabric material or a fleece material. The surface layer of the pre-form substrate may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material; (k) a resin-based material; (l) a polymer material; (m) polypropylene; (n) polyester; (o) polypropylene and polyester; (p) polyethylene terephthalate.

The present invention relates to a vehicle interior component produced in a mold comprising a first surface and a second surface by a process comprising placing a pre-formed component onto the first surface of the mold; compressing the pre-formed component between the first surface of the mold and the second surface of the mold to form the pre-formed component into a compression-formed component; removing the compression-formed component from the mold; and applying a cover to the compression-formed component to form a panel assembly. The cover may comprise an exterior surface providing a surface effect of the panel assembly. The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The pre-formed component may comprise a substrate layer and a top layer. The process may further comprise the step of forming the pre-formed component from a substrate and a top layer. The substrate layer for the pre-formed component may comprise a fiber mat. The top layer for the pre-formed component may comprise at least one of a fabric material or a fleece material. The top layer may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material. The process may further comprise the step of forming the pre-formed component from a fiber mat. The process may further comprise the step of forming the pre-formed component from a fiber mat and a fabric layer. The pre-formed component may comprise a top layer and a structural layer. The structural layer may comprise a fiber mat. The top layer may comprise an outer surface with a smooth texture and a surface of the structural layer may comprise a rough texture. The top layer may be configured to provide improved profile tolerance for the panel assembly. The structural layer may comprise natural fibers and a resin and the top layer may comprise polypropylene and polyester. The resin may comprise polypropylene and the natural fibers comprise at least one of (a) flax; (b) kenaf. The top layer may comprise at least one of (a) a non-woven fabric; (b) a synthetic fabric; (c) a thermoplastic fabric; (d) a non-woven fiber fabric. The pre-formed component may comprise an area weight of between 1000 grams per square meter and 1800 grams per square meter. The top layer comprises an area weight of between 200 grams per square meter and 300 grams per square meter. The pre-formed component may comprise a thickness of between 1.5 mm and 4 mm and the compression-formed component may comprise a thickness of between 0.8 mm and 3 mm. The process may comprise the step of consolidating the top layer and the structural layer to form the pre-formed component. The process may comprise the step of heating the pre-formed component and the pre-formed component may be compressed as the pre-formed component cools. The process may comprise the step of injecting resin into the mold after the compression-formed component is formed to form an ancillary component of the panel assembly. The process may comprise the steps of activating the top layer of the pre-formed component and adhering the cover to the top layer of the pre-formed component.

The present invention relates to a component for a vehicle interior comprising a pre-formed component and a cover. The pre-formed component may comprise a top layer coupled to a structural layer at a surface of the structural layer. The top layer may comprise an outer surface with a smooth texture and the surface of the structural layer may comprise a rough texture. The top layer may be configured to provide improved profile tolerance for the panel assembly. The structural layer may comprise natural fibers and a resin and the top layer may comprise at least one of (a) polypropylene; (b) polyester; (c) polypropylene and polyester; (d) polyethylene terephthalate. The resin may comprise polypropylene and the natural fibers may comprise at least one of flax and kenaf. The cover may comprise at least one of (a) leather; (b) artificial leather; (c) imitation leather; (d) a composite of a plastic layer and textile backing; (e) a coated fabric; (f) polyvinylchloride coated fabric. The cover may comprise at least one of (a) woven fabric; (b) non-woven fabric; (c) an applique; (d) vinyl; (e) foil.

The present invention relates to a vehicle interior component produced by a process. The process may comprise placing a pre-formed component onto a first surface of a mold. The process may comprise compressing the pre-formed component between the first surface of the mold and a second surface of the mold to form the pre-formed component into a compression-formed component having a shape wherein the shape corresponds to a first contour of the first surface and a second contour of the second surface. The process may comprise removing the compression-formed component from the mold. The process may comprise placing a cover onto the compression-formed component to form a panel assembly. The pre-formed component may comprise a top layer coupled to a structural layer at a surface of the structural layer. The top layer may comprise an outer surface with a smooth texture and the surface of the structural layer may comprise a rough texture. The top layer may be configured to provide improved profile tolerance for the panel assembly. The structural layer may comprise natural fibers and a resin. The top layer may comprise polypropylene and/or polyester. The top layer may comprise at least one of (a) a non-woven fabric; (b) a synthetic fabric; (c) a thermoplastic fabric; (d) a non-woven fiber fabric; (e) a fabric made of polypropylene fibers and polyester fibers. The resin may comprise polypropylene and the natural fibers may comprise at least one of flax and kenaf. The pre-formed component may comprise an area weight of between 1000 grams per square meter and 1800 grams per square meter. The top layer comprises an area weight of between 200 grams per square meter and 300 grams per square meter. The pre-formed component may comprise a thickness of between 1.5 millimeters and 4 millimeters. The compression-formed component may comprise a thickness of between 0.8 millimeters and 3.0 millimeters. The process may comprise the step of consolidating the top layer and the structural layer to form the pre-formed component. The process may comprise the step of heating the pre-formed component. The pre-formed component may compressed as the pre-formed component cools. The process may comprise the step of injecting resin into the mold after the compression-formed component is formed to form an ancillary component of the panel assembly. The process may comprise the steps of activating the top layer of the pre-formed component and adhering the cover to the top layer of the pre-formed component.

The present invention also relates to a vehicle interior component comprising a pre-formed component and a cover. The pre-formed component may comprise a top layer coupled to a structural layer at a surface of the structural layer. The top layer may comprise an outer surface with a smooth texture and the surface of the structural layer may comprise a rough texture. The top layer may be configured to provide improved profile tolerance for the panel assembly. The structural layer may comprise natural fibers and a resin. The top layer may comprise polypropylene and polyester. The top layer may comprise at least one of (a) a non-woven fabric; (b) a synthetic fabric; (c) a thermoplastic fabric; (d) a non-woven fiber fabric; (e) a fabric made of polypropylene fibers and polyester fibers. The resin may comprise polypropylene. The natural fibers comprise at least one of flax and kenaf. The cover may comprise at least one of (a) leather and artificial leather. The cover may comprise at least one of woven fabric, non-woven fabric, an applique, vinyl and foil.

### FIGURES

FIGURE 1A is a schematic perspective view of a vehicle according to an exemplary embodiment.
FIGURE 1B is a schematic perspective view of a vehicle showing a vehicle interior according to an exemplary embodiment.
FIGURE 2A is a schematic perspective view of a vehicle interior component according to an exemplary embodiment.
FIGURE 2B is a schematic perspective view of a vehicle interior component according to an exemplary embodiment.
FIGURE 3A is a schematic partial section view of a vehicle interior component according to an exemplary embodiment.
FIGURE 3B is a schematic partial section view of a vehicle interior component according to an exemplary embodiment.
FIGURE 3C is a schematic partial section view of a vehicle interior component according to an exemplary embodiment.
FIGURE 3D is a schematic partial section view of a vehicle interior component according to an exemplary embodiment.
FIGURE 4A is a schematic section view of a vehicle interior component according to an exemplary embodiment.
FIGURE 4B is a schematic partial section view of a vehicle interior component according to an exemplary embodiment.
FIGURE 4C is a schematic partial cutaway perspective view of a process step to produce a vehicle interior component according to an exemplary embodiment.
FIGURE 4D is a schematic partial cutaway perspective view of a vehicle interior component according to an exemplary embodiment.
FIGURES 5A to 5E are schematic perspective views of a process to form a vehicle interior component according to an exemplary embodiment.
FIGURES 6A to 6E are schematic partial section views of a process to form a vehicle interior component according to an exemplary embodiment.
FIGURES 7A to 7D are schematic perspective views of a process to form a panel assembly for a vehicle interior component according to an exemplary embodiment.
FIGURES 8A to 8F are schematic perspective views of a process to form a vehicle interior component according to an exemplary embodiment.
FIGURES 9A to 9C are schematic perspective views of a process to form a vehicle interior component according to an exemplary embodiment.
FIGURE 9D is a schematic partial perspective detail view of a back side of a vehicle interior component showing an airbag chute or exit according to an exemplary embodiment.
FIGURE 9E is a schematic partial perspective detail view of a back side of a vehicle interior component according to an exemplary embodiment.
FIGURE 9F is a schematic perspective view of a vehicle interior component according to an exemplary embodiment.
FIGURE 10A is a schematic cross-section view of a mold according to an exemplary embodiment.
FIGURE 10B is a schematic cross-section view of a panel assembly being compressed between a first molding element and a second molding element of the mold according to an exemplary embodiment.
FIGURE 10C is a schematic cross-section view of the mold in a closed position according to an exemplary embodiment.
FIGURE 10D is a schematic cross-section view of resin being injected into the mold according to an exemplary embodiment.
FIGURE 10E is a schematic cross-section view of resin forming an ancillary component according to an exemplary embodiment.
FIGURE 10F is a schematic cross-section view of a vehicle interior component formed by a process according to an exemplary embodiment.
FIGURE 11A is a schematic flow diagram of a method for forming a vehicle interior component according to an exemplary embodiment.
FIGURE 11B is a schematic flow diagram of a method for forming a vehicle interior component according to an exemplary embodiment.
FIGURE 11C is a schematic flow diagram of a method for forming a vehicle interior component according to an exemplary embodiment.
FIGURE 12A is a schematic flow diagram of a method for forming a vehicle interior component according to an exemplary embodiment.
FIGURE 12B is a schematic flow diagram of a method for forming a vehicle interior component according to an exemplary embodiment.
FIGURE 12C is a schematic flow diagram of a method for forming a vehicle interior component according to an exemplary embodiment.
FIGURE 13A is a schematic flow diagram of a method for forming a vehicle interior component according to an exemplary embodiment.
FIGURE 13B is a schematic flow diagram of a method for forming a vehicle interior component according to an exemplary embodiment.
FIGURE 13C is a schematic flow diagram of a method for forming a vehicle interior component according to an exemplary embodiment.
FIGURE 14A is a schematic flow diagram of a method for forming a vehicle interior component according to an exemplary embodiment.
FIGURE 14B is a schematic flow diagram of a method for forming a vehicle interior component according to an exemplary embodiment.
FIGURE 14C is a schematic flow diagram of a method for forming a vehicle interior component according to an exemplary embodiment.
FIGURE 15A is a schematic flow diagram of a method for forming a vehicle interior component according to an exemplary embodiment.
FIGURE 15B is a schematic flow diagram of a method for forming a vehicle interior component according to an exemplary embodiment.
FIGURE 15C is a schematic flow diagram of a method for forming a vehicle interior component according to an exemplary embodiment.
FIGURE 16A is a schematic flow diagram of a method for forming a vehicle interior component according to an exemplary embodiment.
FIGURE 16B is a schematic flow diagram of a method for forming a vehicle interior component according to an exemplary embodiment.
FIGURE 16C is a schematic flow diagram of a method for forming a vehicle interior component according to an exemplary embodiment.

### DESCRIPTION

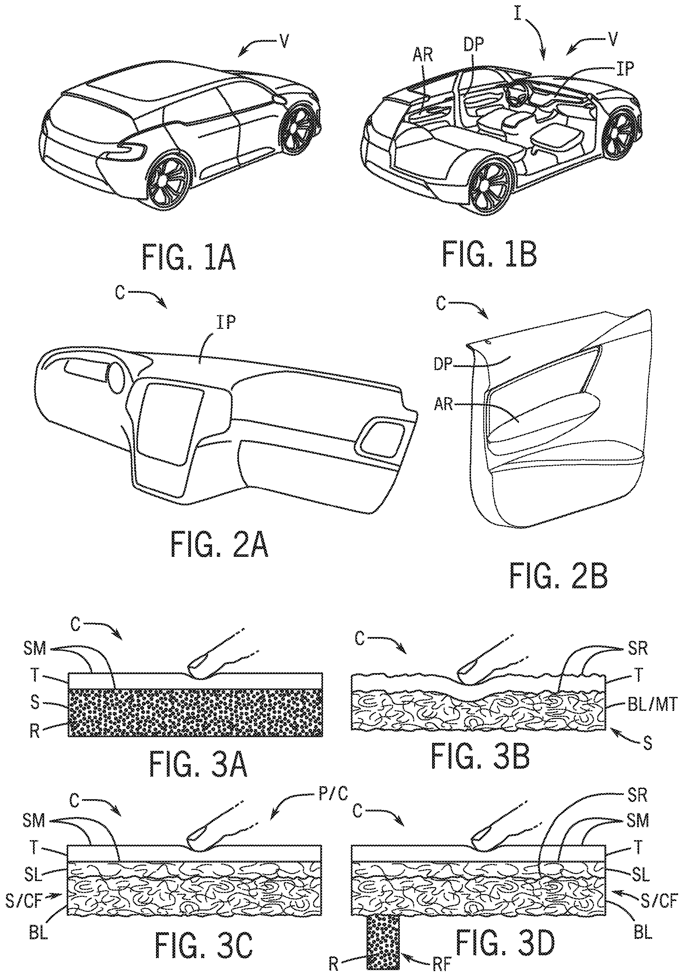

Referring to FIGURES 1A and 1B, a vehicle V providing and interior I is shown schematically according to an exemplary embodiment. As shown schematically according to an exemplary embodiment in FIGURES 1B and 2A-2B, the interior I of the vehicle may comprise any of a variety of types and forms of interior components C such as an instrument panel IP and door panels DP (with armrest AR) and other trim components (e.g. console, floor console, panels, trim panels, etc.).

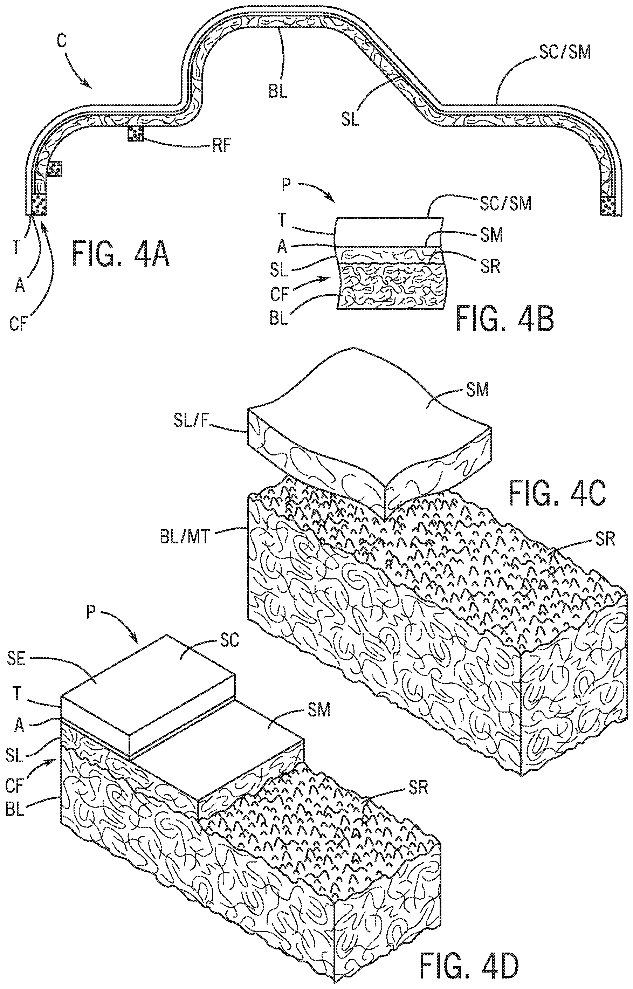

As shown schematically in FIGURES 3A-3D and 4A-4D, a component C (e.g. panel assembly, panel, trim panel, etc.) for the vehicle interior may comprise a substrate/structure S and a cover layer T; a surface effect for the component/panel C may comprise a combination of perceptible features including the smoothness/roughness and hardness/softness (e.g. surface effect as generally understood and perceptible/discernable qualitatively and/or determinable quantitatively with instrumentation, measurement, test, etc. according to generally accepted standards and criteria and/or tactile). Compare FIGURES 3A and 3C-3D (schematically indicating profile/surface effect of smooth/hard) with FIGURE 3B (schematically indicating profile/surface effect of rough/soft).

As shown schematically in FIGURE 3A, a cover T on a structure/substrate S comprising a resin R (e.g. plastic material) may provide a surface effect comprising a generally "hard" feel (e.g. discernable and/or perceptible as rigid, solid, firm, generally incompressible, little or no cushion effect, etc.) and a smooth surface SM (e.g. discernable and/or perceptible as generally consistent, providing little friction or resistance to sliding movement, slick/slippery, with few tactile irregularities, facilitating gliding/sliding movement, etc.) provided by the substrate and the cover. As shown schematically in FIGURE 3B, a cover T on a structure/substrate S comprising a base layer BL such as a fiber mat may provide a surface effect comprising a generally "soft" feel (e.g. discernable and perceptible non-rigid/semi-rigid, flexible, compressible, providing a cushioning effect, etc.) and a rough surface SR (e.g. discernable and/or perceptible as with variations, tactile features such as bumps/obstructions, providing friction/resistance to sliding movement, etc.) provided by the substrate and the cover. See also FIGURE 4C (showing base layer/fiber mat BL/MT for a substrate with a rough surface SR). As shown schematically in FIGURES 3C and 3D, a cover T on a structure/substrate S comprising a base layer BL such as a fiber mat with a surface layer SL may provide a surface effect comprising a generally "hard" feel (e.g. discernable and/or perceptible as rigid, solid, firm, generally incompressible, little or no cushion effect, etc.) and a smooth surface SM (e.g. discernable and/or perceptible as generally consistent, providing little friction or resistance to sliding movement, slick/slippery, with few tactile irregularities, facilitating gliding/sliding movement, etc.) provided by the substrate and the cover. See also FIGURES 4A, 4B and 4D (showing panel assembly C/P with a smooth surface SC/SM provided by the cover T and surface layer SL of the substrate shown as a compression-formed structure CF). (As shown schematically in FIGURES 3D and 4A, the component C may comprise features RF formed from a resin R (e.g. plastic material) for various purposes such as structure/rigidity, attachment, reinforcement, other function/enhancement, etc.)

As shown schematically in FIGURES 4A and 4B the component C may comprise a panel assembly P comprising a composite structure of a substrate provided by a compression-formed structure CF comprising a substrate layer BL and a surface layer SL and with a cover/cover layer T (attached such as by an adhesive A) with features such as resin features RF (e.g. molded plastic/resin features, borders, ribs, etc.). According to an exemplary embodiment shown schematically in FIGURE 4C, the substrate of the panel assembly P is provided by the surface layer SL shown as a fabric/fleece layer F providing a generally smooth surface SM on the substrate layer BL shown a mat/fiber mat MT providing a generally rough surface SR; as shown schematically in FIGURE 4D, the panel assembly is formed with the substrate consolidated/formed into a compression-formed structure CF with surface layer SL and substrate layer BL (consolidated by compression and partial melting, merging, etc.) and with cover T (with adhesive A); the surface effect SE of the panel assembly P is provided by the smooth surface SC of the cover T and the smooth surface SM of the surface layer SL of the substrate/compression-formed structure CF and by the generally rigid form of the compression-formed structure (e.g. by the compressed/consolidated mat/substrate layer BL and fabric/surface layer SL). See also FIGURES 3C and 3D.

As indicated schematically in FIGURES 3C-3D and 4A-4B and 4D, the component/panel assembly C/P may be formed from a substrate/structure S such as compression-formed structure CF comprising a substrate layer SL such as a fiber mat MT (e.g. of a lightweight material); the substrate layer/fiber mat may provide a rough surface SR and a semi-rigid/soft form (e.g. a surface effect that may be generally undesirable for a panel assembly of a vehicle interior component). As indicated schematically in FIGURES 3B and 4C, the surface effect of the panel assembly P formed from with a substrate comprising the fiber mat MT does not indicate the rough surface and/or semi-rigid/soft construction of the substrate layer/fiber mat MT but rather presents a surface effect that comprises a smooth surface and a generally rigid form (e.g. a surface effect that may be generally desirable for a panel assembly of a vehicle interior component).

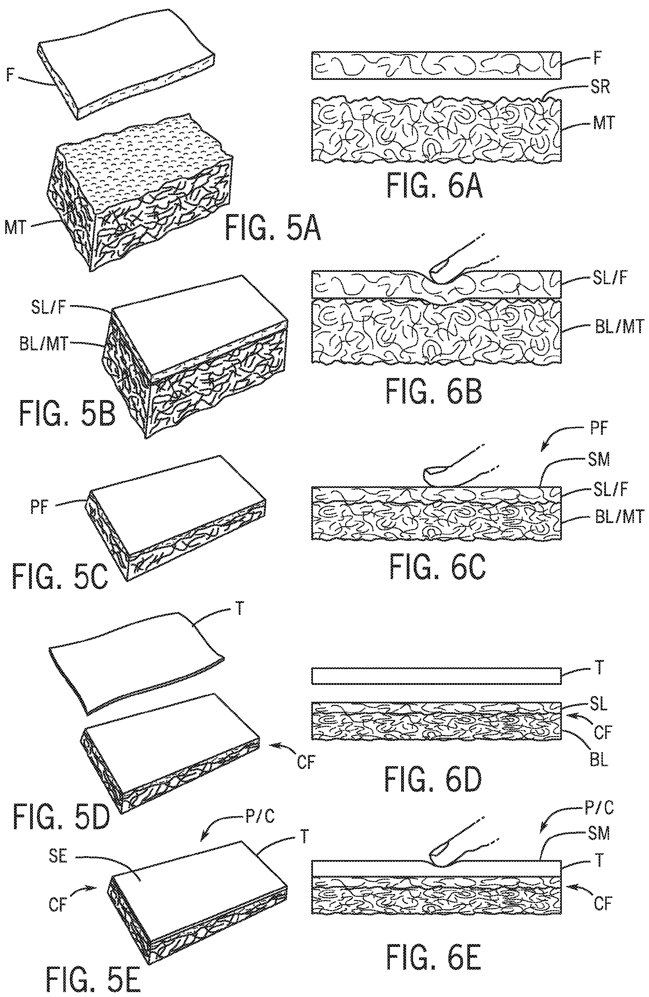

Referring to FIGURES 5A-5E and 6A-6E, construction and formation of the panel assembly P for the component C is shown schematically according to an exemplary embodiment. A surface layer shown as fabric/fleece F providing a smooth surface SM is applied to a substrate layer shown as MT (e.g. a fiber mat) providing a rough surface SR and in a generally non-rigid/flexible form. See FIGURES 5A-5B and 6A-6B. A pre-form substrate PF is formed by consolidation with the merging/melting/fusion (at least partially) at the interface of the surface layer/fabric SLIP and the substrate layer/mat BL/MT; as indicated schematically, the pre-form substrate PF provides a smooth surface SM and a generally rigid form. See FIGURES 5C and 6C. Compare FIGURE 6B (schematically indicating surface effect of smooth/soft for surface layer on substrate layer for pre-form substrate) with FIGURE 6C (schematically indicating surface effect of smooth/hard of pre-form substrate with consolidation of surface layer and substrate layer). As shown schematically in FIGURES 5D-5E and 6D-6E, to form the panel assembly P/C, the pre-form substrate PF is formed into a compression-formed structure CF with a cover T; as shown schematically in FIGURE 5E, the panel assembly P/C provides a surface effect SE comprising a smooth surface SM (e.g. from the surface layer SL and cover T) and a generally rigid form (e.g. from the compression-formed structure CF). See also FIGURE 3B (schematically indicating surface effect for panel assembly of smooth/hard).

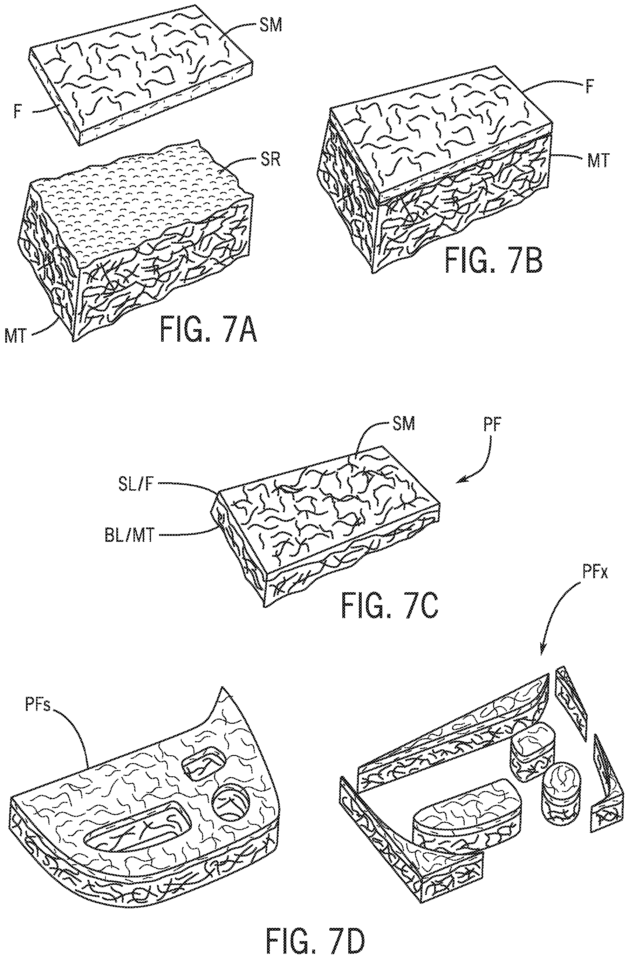

As shown schematically according to an exemplary embodiment in FIGURES 5A-5C, 6A-6C and 7A-7D, the pre-form substrate (e.g. pre-formed component) of the panel assembly may comprise the fabric/fleece/sheet F providing a surface layer SL on the fiber/polymeric material mat MT providing a substrate layer BL. As indicated schematically, the pre-form substrate PF is formed by consolidation/compression (with heating/merging at the interface) of the mat/substrate layer BL/MT and the fabric/surface layer SLIP to provide a generally rigid form. See FIGURES 6B-6C and 7B-7C. As indicated schematically in FIGURES 7C-7D, the pre-form substrate PF can be formed/shaped such as by cutting/trimming into a formed/shaped pre-form substrate PFs for formation of the panel assembly and with residual material PFx (e.g. available for disposal, reuse, recycling, etc.).

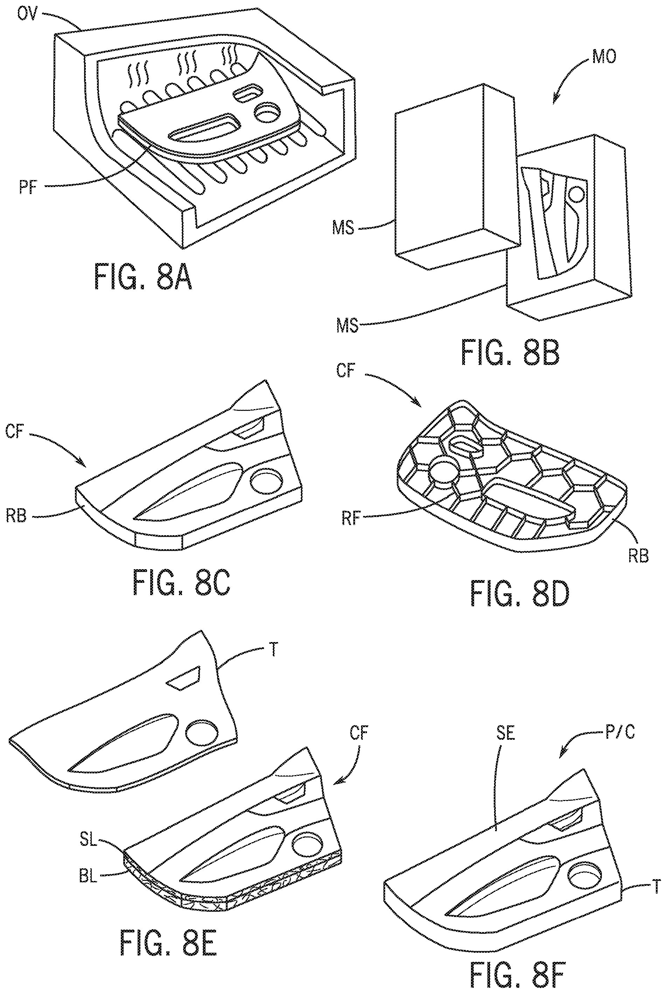

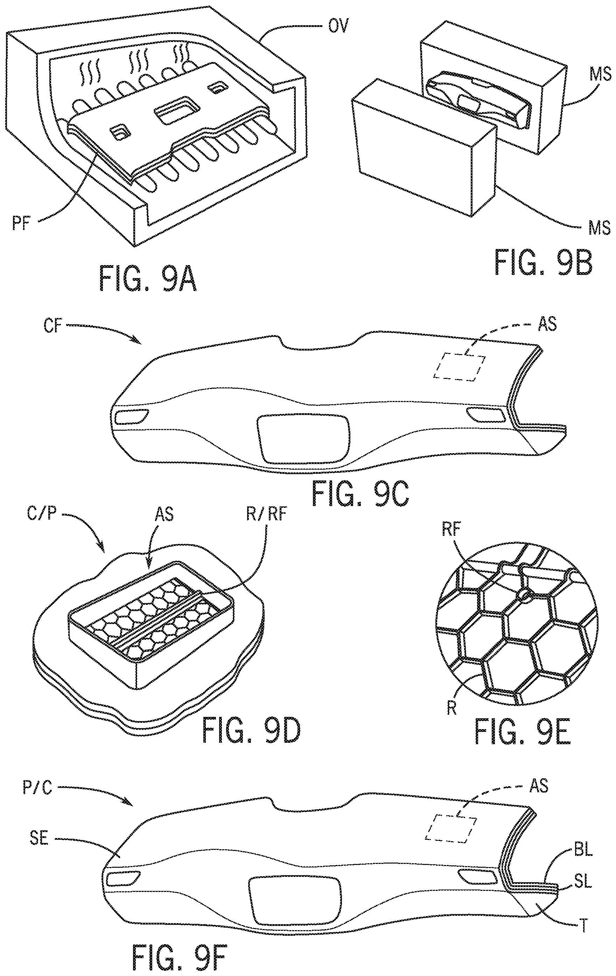

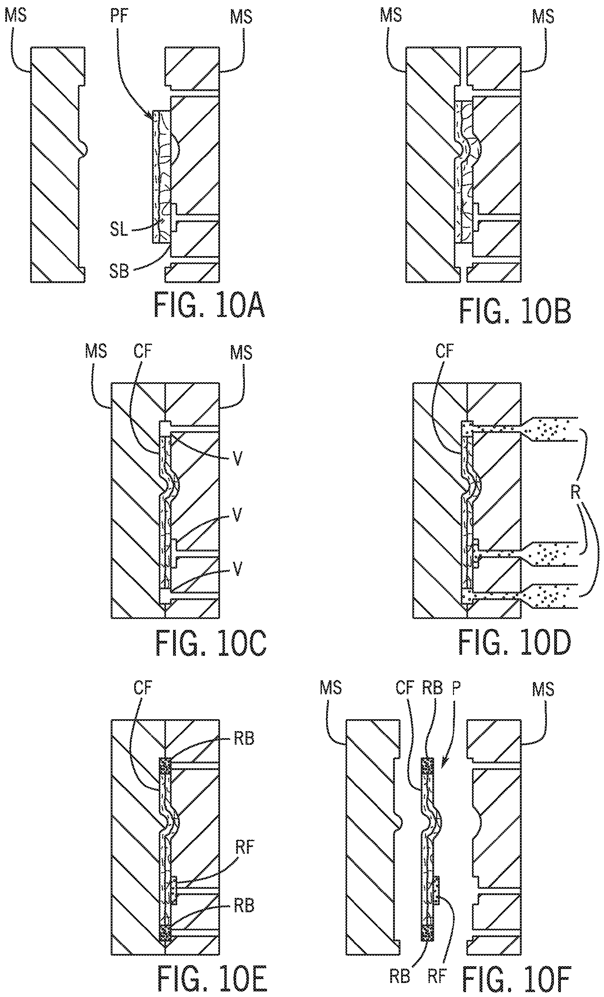

As shown schematically according to an exemplary embodiment in FIGURES 5D-5E, 6D-6E, 8A-8F and 9A-9F, the pre-form substrate PF can be formed into a panel assembly P (e.g. for vehicle interior component C) providing a surface effect SE. As shown schematically in FIGURES 8A and 9A, the pre-form substrate PF is pre-treated/heated (e.g. softened, made flexible, etc. as shown in oven OV) and then placed into a mold MO (shown as having mold sections MS) for forming into a compression-formed structure CF (e.g. having the form and shape for the panel assembly/component). See FIGURES 8C-8D and 9C. As shown schematically in FIGURES 8C-8D and 9C-9E, the compression-formed structure CF may comprise features formed from a resin material R such as ribs/structure RF (see FIGURES 8C-8D and 9E) and/or a border RB (see FIGURES 8C-8D); the compression-formed structure CF may be provide with resin structure such as a compartment AS for an airbag system (see FIGURES 9D and 9F). See also FIGURES 10A-10F (showing schematically the injection-molding process in mold MO with sections MS and voids V to use a resin material R to form features RF and/or border RB for and/or on the compression-formed structure CF). As shown schematically in FIGURES 8E-8F and 9F, a cover T may be provided on the compression-formed structure to form the panel assembly P (e.g. trim panel, interior component, etc.). Compare FIGURES 8E-8F (component as door panel) and FIGURE 9F (component as instrument panel with airbag compartment AS).

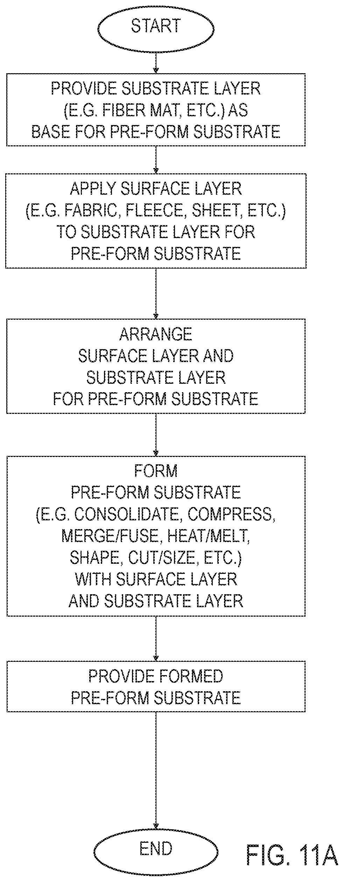

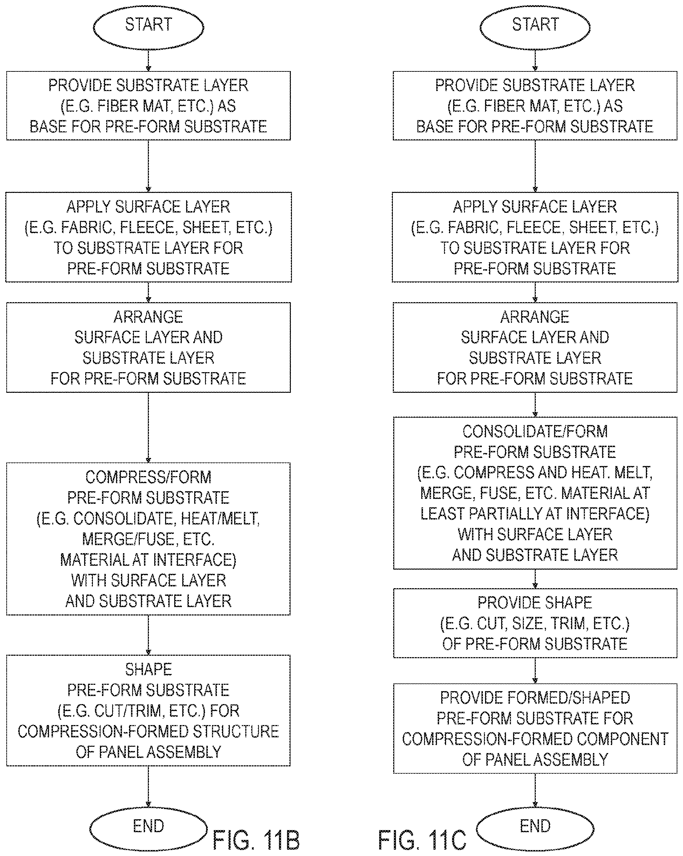

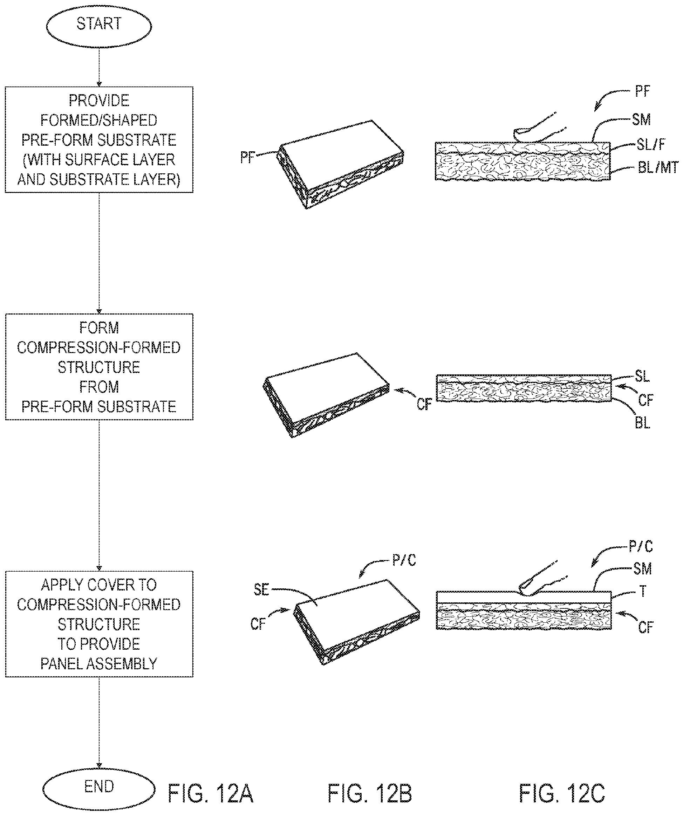

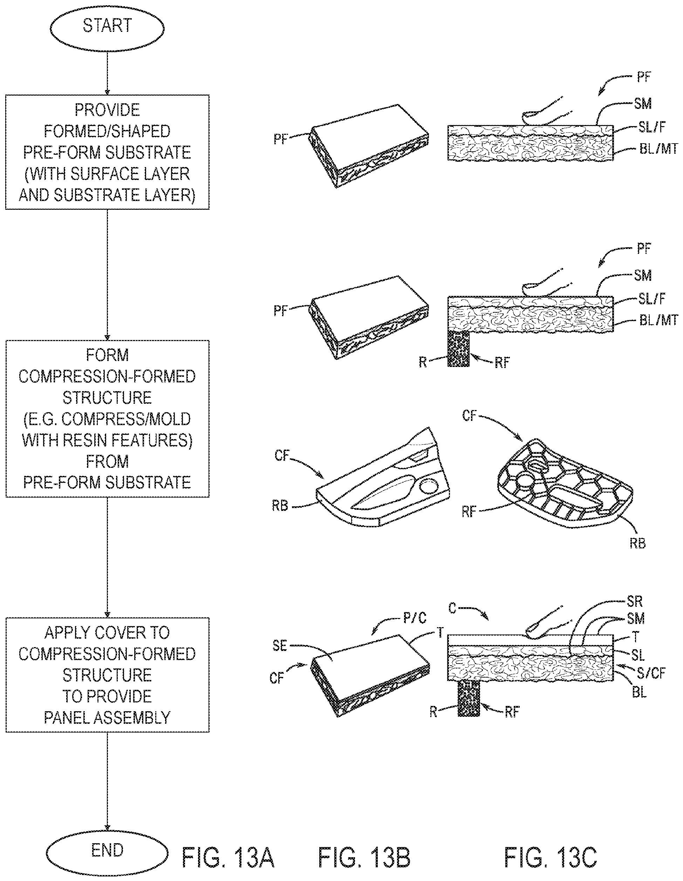

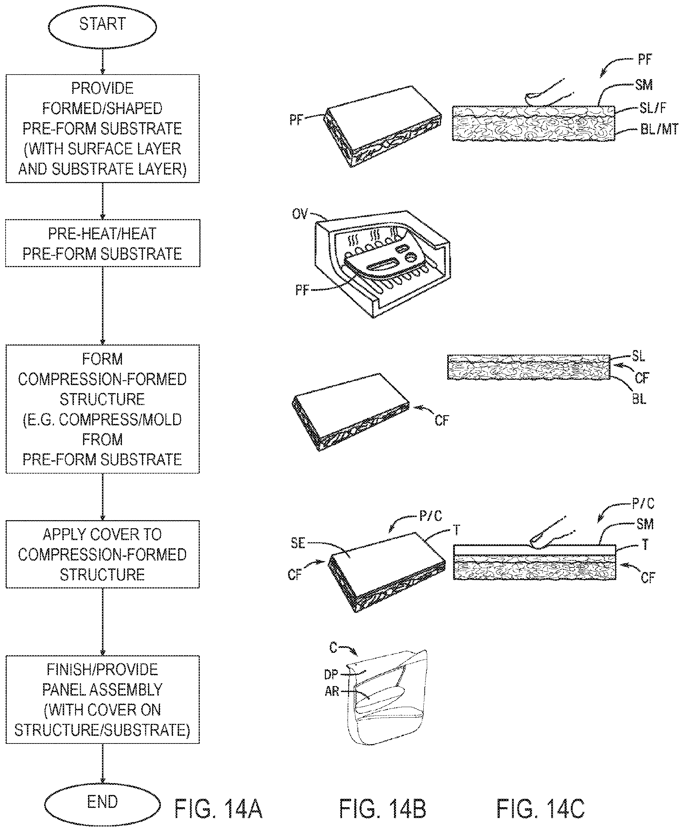

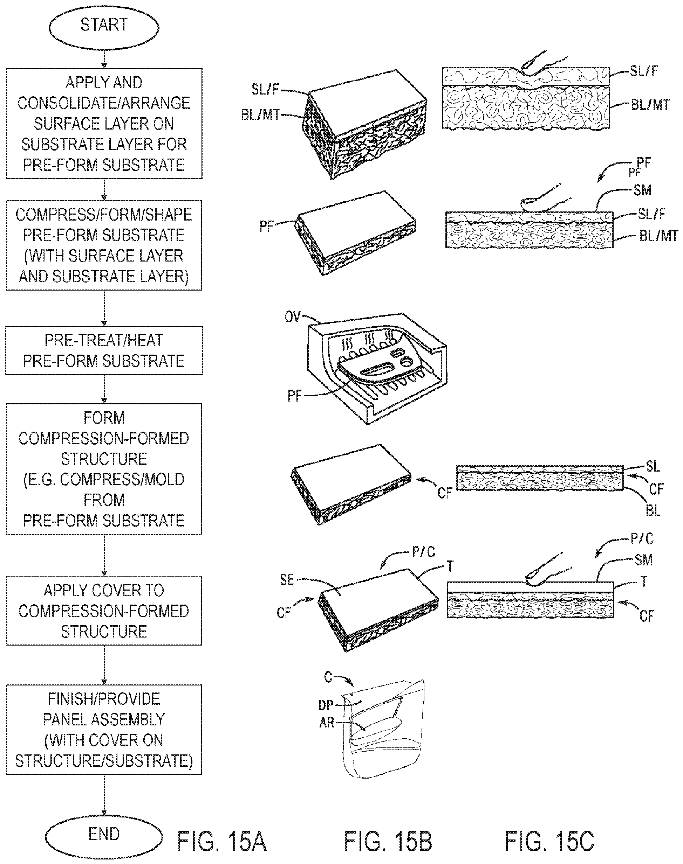

Referring to FIGURES 11A-11C, a process for producing a pre-form substrate for a panel assembly is shown schematically as comprising a series of steps according to an exemplary embodiment. A surface layer/sheet and a substrate layer/mat may be arranged/consolidated and shaped/formed into a pre-formed substrate. See also FIGURES 5A-5C, 6A-6C and 7A-7D. Referring to FIGURES 12A-12C, 13A-13C, 14A-14C and 15A-15C, a process for producing a panel assembly is shown schematically as comprising a series of steps according to an exemplary embodiment. A pre-form substrate may be formed/shaped into a compression-formed structure and provided with a cover to form the panel assembly (which may comprise resin features). See also FIGURE 5C-5E, 6C-6E, 8A-8F and 9A-9F.

According to an exemplary embodiment as shown schematically in FIGURES 4A-4D, 5A-5E and 6A-6E, a vehicle interior component produced in a mold may comprise a first surface and a second surface by a process comprising placing a pre-form substrate onto the first surface of the mold; forming a compression-formed structure from the pre-form substrate by compressing the pre-form substrate between the first surface of the mold and the second surface of the mold; applying a cover to the compression-formed structure to form a panel assembly providing a surface effect. See FIGURES 11A-11C (exemplary embodiment of process for producing pre-form substrate for panel assembly) and FIGURES 12A-12C, 13A-13C, 14A-14C and 15A-15C (exemplary embodiment of process for producing a panel assembly from the pre-form substrate). The cover may comprise the exterior surface of the panel assembly providing at least partially the surface effect of the panel assembly. The pre-form substrate may comprise a substrate layer and a surface layer. The compression-formed structure may comprise the substrate layer and the surface layer. The surface effect of the panel assembly may be at least partially provided by a surface effect of the surface layer of the compression-formed structure. See FIGURES 3C-3D (schematically indicating surface effect of smooth/hard for panel assembly); compare FIGURE 3B (schematically indicating surface effect of rough/soft). The surface effect of the panel assembly may be at least partially provided by a surface effect of the surface layer of the pre-form substrate. The surface layer of the pre-form substrate may comprise a surface effect comprising a generally smooth texture. The surface layer of the compression-formed structure may comprise a surface effect comprising a generally smooth texture. The substrate layer for the pre-form substrate may comprise a surface effect comprising a generally rough texture. The pre-form substrate may comprise a surface effect comprising the surface effect of the surface layer. The compression-formed structure may comprise a surface effect comprising the surface effect of the surface layer. The step of forming the compression-formed structure may comprise forming the compression-formed structure with a surface effect generally comprising the surface effect of the pre-form substrate. The surface effect of the panel assembly may generally comprise the surface effect of the surface layer of the compression-formed structure. The surface effect of the panel assembly may generally comprise a surface effect of the surface layer of the compression-formed structure and a surface effect of the cover of the panel assembly. The substrate layer for the pre-form substrate may comprise a fiber mat. The substrate layer in the compression-formed structure may comprise a generally rigid fiber mat. The step of forming the compression-formed structure may comprise forming the substrate layer into a generally rigid form. The surface effect of the panel assembly may comprise the generally rigid form of the compression-formed structure. The surface effect of the panel assembly may comprise the generally rigid form of the substrate layer of the compression-formed structure. The surface effect of the panel assembly may comprise a generally smooth texture and a generally rigid form. The generally smooth texture of the panel assembly may be provided by (a) a surface effect of the cover and (b) a surface effect of the surface layer of the compression-formed structure formed from the pre-form substrate. See FIGURES 3C-3D (schematically indicating surface effect of smooth/hard for panel assembly); compare FIGURE 3B (schematically indicating surface effect of rough/soft). The generally rigid form of the panel assembly may be provided by the substrate layer of the compression-formed structure formed from the pre-form substrate. The surface effect of the panel assembly may comprise a generally smooth surface effect of the surface layer of the compression-formed structure rather than a generally rough surface effect of the substrate layer for the pre-form substrate. The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The compression-formed structure may comprise a shape (for the panel assembly/component). See FIGURES 8A-8F, 9A-9F and 10A-10F. The panel assembly may comprise at least partially the shape of the compression-formed structure. The shape may comprise a first contour provided by the first surface of the mold and a second contour provided by the second surface of the mold. The substrate layer for the pre-form substrate may comprise a fiber mat. The surface layer for the pre-form substrate may comprise at least one of a fabric material or a fleece material. The surface layer of the pre-form substrate may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material; (k) a resin-based material; (l) a polymer material; (m) polypropylene; (n) polyester. The process may further comprise the step of forming the pre-form substrate from a fiber mat. The process may further comprise the step of forming the pre-form substrate from a fiber mat and a fabric layer. The pre-form substrate may comprise a top layer and a structural layer; the top layer may comprise the surface layer and the structural layer may comprise the substrate layer. The vehicle interior component may further comprise the step of forming the pre-form substrate. The step of forming the pre-form substrate may comprise forming an interface between the surface layer and the substrate layer so that the surface effect of the pre-form substrate may comprise the surface effect of the surface layer. The step of forming the pre-form substrate may comprise forming an interface between the surface layer and the substrate layer so that the surface effect of the pre-form substrate may comprise a generally smooth surface effect of the surface layer rather than a generally rough surface effect of the substrate layer. Forming the interface between the surface layer and the substrate layer may comprise at least partial melting of the substrate layer into the surface layer. The process may further comprise the step of forming the pre-form substrate from a substrate layer and a surface layer. The step of forming the pre-form substrate may comprise applying the surface layer to the substrate layer. The substrate layer for the pre-form substrate may comprise a generally compressible fiber mat. The substrate layer in the compression-formed structure may comprise a generally rigid fiber mat. The step of forming the pre-form substrate may comprise consolidating the surface layer and the substrate layer. The step of forming the pre-form substrate may comprise consolidating the surface layer and the substrate layer into a generally rigid form. The step of forming the compression-formed structure may comprise forming the substrate layer into a generally rigid form. The process may further comprise the step of removing the compression-formed structure from the mold before applying the cover. The surface layer may be configured to provide improved profile tolerance for the panel assembly. The substrate layer may comprise natural fibers and a resin and the surface layer may comprise polypropylene and polyester. The resin may comprise polypropylene and the natural fibers comprise at least one of (a) flax; (b) kenaf. The surface layer may comprise at least one of (a) a non-woven fabric; (b) a synthetic fabric; (c) a thermoplastic fabric; (d) a non-woven fiber fabric. The pre-form substrate may comprise an area weight of between 1000 grams per square meter and 1800 grams per square meter. The surface layer comprises an area weight of between 200 grams per square meter and 300 grams per square meter. The pre-form substrate may comprise a thickness of between 1.5 mm and 4 mm and the compression-formed structure may comprise a thickness of between 0.8 mm and 3 mm. The pre-form substrate may comprise a pre-formed component; the process may further comprise the step of consolidating the surface layer and the substrate layer to form the pre-formed component. The process may comprise the step of heating the pre-formed component; the pre-formed component may be compressed as the pre-formed component cools. The process may comprise the step of injecting resin into the mold after the compression-formed component is formed to form an ancillary component of the panel assembly. The process may comprise the steps of activating the surface layer of the pre-formed component and adhering the cover to the surface layer of the pre-formed component. See FIGURES 3C-3D, 4A-4B, 5E, 6E, 8F and 9F (showing panel assembly component with pre-form substrate/compression-formed structure to provide surface effect).

According to an exemplary embodiment as shown schematically in FIGURES 4A-4D, 5A-5E and 6A-6E, a vehicle interior component may comprise a compression-formed structure formed from a pre-form substrate comprising a surface layer and a substrate layer; and a cover applied to the compression-formed structure to form a panel assembly providing a surface effect. See FIGURES 3C-3D (schematically indicating surface effect of smooth/hard for panel assembly) and FIGURES 8A-8F, 9A-9F and 10A-10F. The cover may comprise the exterior surface of the panel assembly. The surface effect of the panel assembly may generally comprise a surface effect of the surface layer of the compression-formed structure and a surface effect of the cover of the panel assembly. The surface layer of the pre-form substrate may comprise a surface effect comprising a generally smooth texture. The surface layer of the compression-formed structure may comprise a surface effect comprising a generally smooth texture. The substrate layer for the pre-form substrate may comprise a surface effect comprising a generally rough texture. The surface effect of the panel assembly may generally comprise the surface effect of the surface layer of the compression-formed structure. The substrate layer for the pre-form substrate may comprise a fiber mat. The substrate layer in the compression-formed structure may comprise a generally rigid fiber mat. The compression-formed structure may comprise a generally rigid form. The surface effect of the panel assembly may comprise the generally rigid form of the compression-formed structure. The surface effect of the panel assembly may comprise a generally rigid form of the substrate layer of the compression-formed structure. See FIGURES 3C-3D, 4A-4B, 5E, 6E, 8F and 9F (showing panel assembly component with pre-form substrate/compression-formed structure to provide surface effect). The surface effect of the panel assembly may comprise a generally smooth texture and a generally rigid form. The generally smooth texture of the panel assembly may be provided by (a) the surface effect of the cover and (b) the surface effect of the surface layer of the compression-formed structure formed from the pre-form substrate. See FIGURES 3C-3D (schematically indicating surface effect of smooth/hard for panel assembly); compare FIGURE 3B (schematically indicating surface effect of rough/soft). The generally rigid form of the panel assembly may be provided by the substrate layer of the compression-formed structure formed from the pre-form substrate. The surface effect of the panel assembly may comprise a generally smooth surface effect of the surface layer of the compression-formed structure rather than a generally rough surface effect of the substrate layer for the pre-form substrate. The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The compression-formed structure may comprise a shape. The panel assembly may at least partially comprise the shape of the compression-formed structure. The substrate layer for the pre-form substrate may comprise a fiber mat. The substrate layer for the pre-form substrate may comprise a generally flexible fiber mat. The substrate layer of the compression-formed structure may comprise a generally rigid fiber mat. The surface layer for the pre-form substrate may comprise at least one of a fabric material or a fleece material. The surface layer of the pre-form substrate may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material; (k) a resin-based material; (l) a polymer material; (m) polypropylene; (n) polyester; (o) polypropylene and polyester; (p) polyethylene terephthalate.

According to an exemplary embodiment as shown schematically in FIGURES 4A-4D, 5A-5E and 6A-6E, a vehicle interior component produced in a mold may comprise a first surface and a second surface by a process comprising placing a pre-formed component onto the first surface of the mold; compressing the pre-formed component between the first surface of the mold and the second surface of the mold to form the pre-formed component into a compression-formed component; removing the compression-formed component from the mold; and applying a cover to the compression-formed component to form a panel assembly. See FIGURES 11A-11C (exemplary embodiment of process for producing pre-form substrate for panel assembly) and FIGURES 12A-12C, 13A-13C, 14A-14C and 15A-15C (exemplary embodiment of process for producing a panel assembly from the pre-form substrate). The cover may comprise an exterior surface providing a surface effect of the panel assembly. See FIGURES 3C-3D (schematically indicating surface effect of smooth/hard for panel assembly); compare FIGURE 3B (schematically indicating surface effect of rough/soft). The cover of the panel assembly may comprise at least one of (a) leather; (b) synthetic leather; (c) imitation leather; (d) a composite of a plastic layer and textile backing; (e) a coated fabric; (f) polyvinylchloride coated fabric; (g) a woven fabric; (h) a non-woven fabric; (i) an applique; (j) vinyl; (k) a foil. The pre-formed component may comprise a substrate layer and a top layer. The process may further comprise the step of forming the pre-formed component from a substrate and a top layer. The substrate layer for the pre-formed component may comprise a fiber mat. The top layer for the pre-formed component may comprise at least one of a fabric material or a fleece material. The top layer may comprise at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material. The process may further comprise the step of forming the pre-formed component from a fiber mat. The process may further comprise the step of forming the pre-formed component from a fiber mat and a fabric layer. The pre-formed component may comprise a top layer and a structural layer. The structural layer may comprise a fiber mat. The top layer may comprise an outer surface with a smooth texture and a surface of the structural layer may comprise a rough texture. See FIGURES 3C-3D (schematically indicating surface effect of smooth/hard for panel assembly); compare FIGURE 3B (schematically indicating surface effect of rough/soft). The top layer may be configured to provide improved profile tolerance for the panel assembly. The structural layer may comprise natural fibers and a resin and the top layer may comprise polypropylene and polyester. The resin may comprise polypropylene and the natural fibers comprise at least one of (a) flax; (b) kenaf. The top layer may comprise at least one of (a) a non-woven fabric; (b) a synthetic fabric; (c) a thermoplastic fabric; (d) a non-woven fiber fabric. The pre-formed component may comprise an area weight of between 1000 grams per square meter and 1800 grams per square meter. The top layer comprises an area weight of between 200 grams per square meter and 300 grams per square meter. The pre-formed component may comprise a thickness of between 1.5 mm and 4 mm and the compression-formed component may comprise a thickness of between 0.8 mm and 3 mm. The process may comprise the step of consolidating the top layer and the structural layer to form the pre-formed component. The process may comprise the step of heating the pre-formed component and the pre-formed component may be compressed as the pre-formed component cools. The process may comprise the step of injecting resin into the mold after the compression-formed component is formed to form an ancillary component of the panel assembly. The process may comprise the steps of activating the top layer of the pre-formed component and adhering the cover to the top layer of the pre-formed component. See FIGURES 3C-3D, 4A-4B, 5E, 6E, 8F and 9F (showing panel assembly component with pre-form substrate/compression-formed structure to provide surface effect).

According to an exemplary embodiment as shown schematically in FIGURES 4A-4D, 5A-5E and 6A-6E, component for a vehicle interior may comprise a pre-formed component and a cover. See also FIGURES 8A-8F, 9A-9F and 10A-10F. The pre-formed component may comprise a top layer coupled to a structural layer at a surface of the structural layer. The top layer may comprise an outer surface with a smooth texture and the surface of the structural layer may comprise a rough texture. See FIGURES 3C-3D (schematically indicating surface effect of smooth/hard for panel assembly); compare FIGURE 3B (schematically indicating surface effect of rough/soft). The top layer may be configured to provide improved profile tolerance for the panel assembly. The structural layer may comprise natural fibers and a resin and the top layer may comprise at least one of (a) polypropylene; (b) polyester; (c) polypropylene and polyester; (d) polyethylene terephthalate. The resin may comprise polypropylene and the natural fibers may comprise at least one of flax and kenaf. The cover may comprise at least one of (a) leather; (b) artificial leather; (c) imitation leather; (d) a composite of a plastic layer and textile backing; (e) a coated fabric; (f) polyvinylchloride coated fabric. The cover may comprise at least one of (a) woven fabric; (b) non-woven fabric; (c) an applique; (d) vinyl; (e) foil.

According to an exemplary embodiment as shown schematically in FIGURES 4A-4D, 5A-5E and 6A-6E, a vehicle interior component may be produced by a process. See also FIGURES 8A-8F, 9A-9F and 10A-10F. The process may comprise placing a pre-formed component onto a first surface of a mold. The process may comprise compressing the pre-formed component between the first surface of the mold and a second surface of the mold to form the pre-formed component into a compression-formed component having a shape wherein the shape corresponds to a first contour of the first surface and a second contour of the second surface. See FIGURES 11A-11C (exemplary embodiment of process for producing pre-form substrate for panel assembly) and FIGURES 12A-12C, 13A-13C, 14A-14C and 15A-15C (exemplary embodiment of process for producing a panel assembly from the pre-form substrate). The process may comprise removing the compression-formed component from the mold. The process may comprise placing a cover onto the compression-formed component to form a panel assembly. The pre-formed component may comprise a top layer coupled to a structural layer at a surface of the structural layer. The top layer may comprise an outer surface with a smooth texture and the surface of the structural layer may comprise a rough texture. See FIGURES 3C-3D (schematically indicating surface effect of smooth/hard for panel assembly); compare FIGURE 3B (schematically indicating surface effect of rough/soft). The top layer may be configured to provide improved profile tolerance for the panel assembly. See FIGURES 3C-3D, 4A-4B, 5E, 6E, 8F and 9F (showing panel assembly component with pre-form substrate/compression-formed structure to provide surface effect/profile tolerance). The structural layer may comprise natural fibers and a resin. The top layer may comprise polypropylene and/or polyester. The top layer may comprise at least one of (a) a non-woven fabric; (b) a synthetic fabric; (c) a thermoplastic fabric; (d) a non-woven fiber fabric; (e) a fabric made of polypropylene fibers and polyester fibers. The resin may comprise polypropylene and the natural fibers may comprise at least one of flax and kenaf. The pre-formed component may comprise an area weight of between 1000 grams per square meter and 1800 grams per square meter. The top layer comprises an area weight of between 200 grams per square meter and 300 grams per square meter. The pre-formed component may comprise a thickness of between 1.5 millimeters and 4 millimeters. The compression-formed component may comprise a thickness of between 0.8 millimeters and 3.0 millimeters. The process may comprise the step of consolidating the top layer and the structural layer to form the pre-formed component. The process may comprise the step of heating the pre-formed component. The pre-formed component may compressed as the pre-formed component cools. The process may comprise the step of injecting resin into the mold after the compression-formed component is formed to form an ancillary component of the panel assembly. The process may comprise the steps of activating the top layer of the pre-formed component and adhering the cover to the top layer of the pre-formed component.

According to an exemplary embodiment as shown schematically in FIGURES 4A-4D, 5A-5E and 6A-6E, a vehicle interior component may comprise a pre-formed component and a cover. See also FIGURES 8A-8F, 9A-9F and 10A-10F. The pre-formed component may comprise a top layer coupled to a structural layer at a surface of the structural layer. The top layer may comprise an outer surface with a smooth texture and the surface of the structural layer may comprise a rough texture. See FIGURES 3C-3D (schematically indicating surface effect of smooth/hard for panel assembly); compare FIGURE 3B (schematically indicating surface effect of rough/soft). The top layer may be configured to provide improved profile tolerance for the panel assembly. The structural layer may comprise natural fibers and a resin. The top layer may comprise polypropylene and polyester. The top layer may comprise at least one of (a) a non-woven fabric; (b) a synthetic fabric; (c) a thermoplastic fabric; (d) a non-woven fiber fabric; (e) a fabric made of polypropylene fibers and polyester fibers. The resin may comprise polypropylene. The natural fibers comprise at least one of flax and kenaf. The cover may comprise at least one of (a) leather and artificial leather. The cover may comprise at least one of woven fabric, non-woven fabric, an applique, vinyl and foil.

### Exemplary Embodiment

According to an exemplary embodiment as shown schematically in FIGURES 1A-1B, a vehicle V may comprise an interior including a door panel DP, an armrest AR and an instrument panel IP.

According to an exemplary embodiment, a vehicle interior component C is shown schematically in FIGURE 2A as instrument panel IP.

According to an exemplary embodiment, vehicle interior component C is shown schematically in FIGURE 2B as door panel DP with an arm rest AR.

According to an exemplary embodiment as shown schematically in FIGURES 4A and 4B, vehicle interior component C may comprise a compression formed component FC coupled to a cover T with an adhesive A. Compression formed component FC may comprise a structural layer SL comprising a surface SR with a rough texture and a top layer TL comprising an outer surface SM with a smooth texture. The top layer may be configured to provide improved profile tolerance for vehicle trim component C at a surface SC. The top layer may be configured to provide a smooth textured surface SM for vehicle trim component C.

According to an exemplary embodiment as shown schematically in FIGURE 7A, a fiber mat MT and a fabric F may be provided to form a panel assembly from which to make various vehicle interior components (e.g. door panels, instrument panels, floor consoles, etc.). Mat MT may comprise natural fibers and a resin. The resin may comprise polypropylene and the natural fibers may comprise at least one of flax and kenaf. Mat MT may include a combination of structural fibers (e.g. natural and/or synthetic fibers) and thermoplastic resin (e.g. polypropylene (PP), acrylonitrile butadiene styrene (ABS), polycarbonate (PC), etc.). Fabric F may include a combination of polypropylene and polyester. A surface SR of mat MT may comprise a rough texture. Fabric F may comprise an outer surface SM with a smooth texture. Fabric F may be configured to provide improved profile tolerance for a vehicle trim component formed from mat MT. Fabric F may comprise an area weight of between 200 grams per square meter and 300 grams per square meter.

According to an exemplary embodiment as shown schematically in FIGURE 7B, fabric F may be applied to mat MT.

According to an exemplary embodiment as shown schematically in FIGURE 7C, fabric F and mat MT may be consolidated (e.g. heated and compressed, densified, fused, bonded, stiffened) to form a pre-from PF.

According to an exemplary embodiment as shown schematically in FIGURE 7D, pre-from PF may be cut to form a pre-form PFs with a desired shape. Offal PFx may be formed as pre-form PF is cut to form pre-form PFs with a desired shape. Pre-form PF may comprise an area weight of between 1000 grams per square meter and 1800 grams per square meter. Pre-form PF may comprise a thickness of between 1.5 millimeters and 4 millimeters.

According to an exemplary embodiment as shown schematically in FIGURE 8A, pre-form PF may be heated in an oven OV. As shown schematically in FIGURE 8B, heated pre-form PF may be transferred into a mold MO. As shown schematically in FIGURES 8C and 8D, a compression-formed component CF shown as a door panel substrate or carrier may be produced by a process of compression forming and injection molding. According to an exemplary embodiment, pre-form PF may be compressed and/or formed to form compression-formed component CF; plastic resin may be injected on compression-formed component CF to form panel assembly P comprising at least one of (a) a resin border RB; (b) a resin feature RF. See FIGURES 10A-10F. As shown schematically in FIGURE 8D, compression-formed component CF shown as a door panel substrate or carrier may be formed into a desired form and dimension with features RF at edges of compression-formed component CF; compression-formed component CF may provide features shown as plastic ribs on a back side of compression-formed component CF to improve structural integrity and rigidity. According to an exemplary embodiment, a plastic rib may be placed at various locations on a back side of compression-formed component CF (e.g. along an edge, in the middle of compression-formed component CF, etc.). According to an exemplary embodiment, multiple plastic ribs may be placed at various different locations on a side of compression-formed component CF.

According to an exemplary embodiment as shown schematically in FIGURE 9A, pre-form PF may be heated in an oven OV. As shown schematically in FIGURE 9B, heated pre-form PF may be transferred into a mold MO. As shown schematically in FIGURE 9C, a compression-formed component CF shown as an instrument panel substrate or carrier may be produced by a process of compression forming and injection molding. According to an exemplary embodiment, pre-form PF may be compressed and/or formed to form compression-formed component CF; plastic resin may be injected on compression-formed component CF to form compression-formed component CF comprising features R/RF. As shown schematically in FIGURE 9D, panel assembly P may be formed into a desired form and dimension with features R on compression-formed component CF; panel assembly P may provide features shown as plastic ribs on a back side of compression-formed component CF to improve structural integrity and rigidity and features shown as an airbag chute to guide deployment of an airbag. According to an exemplary embodiment, a plastic rib may be placed at various locations on a back side of compression-formed component CF (e.g. along an edge, in the middle of compression-formed component CF, etc.). According to an exemplary embodiment, multiple plastic ribs may be placed at various different locations on a side of compression-formed component CF.

According to an exemplary embodiment as shown schematically in FIGURE 10A, a mold may comprise a first molding element MS with a port or set of ports and a second molding element MS. Pre-form PF may be placed between a surface of first molding element MS and a surface of second molding element MS.

According to an exemplary embodiment as shown schematically in FIGURE 10B, second molding element MS may move toward first molding element MS; pre-form PF may be formed to the shape of a mold cavity between a surface of first molding element MS and a surface of second molding element MS.

According to an exemplary embodiment as shown schematically in FIGURE 10C, a mold is at a closed position; pre-form PF may be compressed and/or formed to form compression-formed component CF. Compression-formed component CF may comprise a thickness of between 0.8 millimeters and 3.0 millimeters. As shown schematically in FIGURE 10C, compression-formed component CF may not fill the entire mold cavity leaving at least one empty space or void (shown schematically as void V).

According to an exemplary embodiment as shown schematically in FIGURES 10D and 10E, an empty space or void V may be filled with resin R. One or more voids may be on at least one of a surface or an edge of compression-formed component CF. According to an exemplary embodiment, feature or ancillary component RF may increase the structural integrity of a component C made from compression-formed component CF. According to an exemplary embodiment, feature R may comprise a resin border RB for compression-formed component CF. According to an exemplary embodiment, resin features R may be applied in different arrangements.

According to an exemplary embodiment as shown schematically in FIGURE 10F, second molding element MS may move away from first molding element MS and panel assembly P may be removed from the mold.

According to an exemplary embodiment, a surface of panel assembly P may be activated to provide for improved adhesion and a cover may be adhered to the surface of panel assembly P. The cover may be glued or press laminated to panel assembly P. The cover may comprise at least one of (a) leather; (b) artificial leather; (c) imitation leather; (d) a composite of a plastic layer and textile backing; (e) a coated fabric; (f) polyvinylchloride coated fabric. The cover may comprise at least one of (a) a woven fabric; (b) a non-woven fabric; (c) an applique; (d) vinyl; (e) a foil.

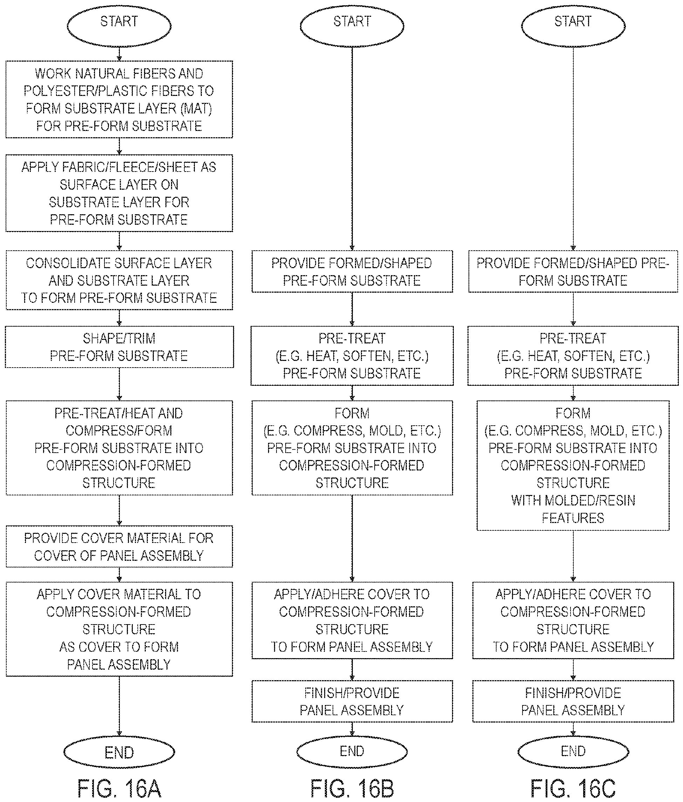

Referring to FIGURES 16A-16C, a process for producing a panel assembly is shown schematically as comprising a series of steps according to an exemplary embodiment. A pre-form substrate comprising a surface layer/sheet and a substrate layer/mat may be consolidated into and formed/shaped into a compression-formed structure and provided with a cover to form a panel assembly. As shown schematically, natural fibers and polypropylene fibers may be needled or joined to form a natural fiber mat or structural layer; a fabric or top layer may be applied to a surface of the natural fiber mat or structural layer; fabric may comprise at least one of (a) a top layer, (b) a non-woven fabric, (c) a synthetic fabric, (d) a thermoplastic fabric, (e) a fabric made of polypropylene fibers and polyester fibers. The top layer and the structural layer may be consolidated and cut to a desired size to form a panel assembly; the panel assembly may be compression formed to a desired shape to form a compression formed component; a cover material may be cut to a desired size to form a cover; the cover may be glued or press laminated to the compression formed component to form the vehicle interior component. As shown schematically, natural fibers and Polypropylene fibers may be needled or joined and partially compressed to form a natural fiber mat or structural layer; the natural fiber mat or structural layer may be cut to a desired size; a fabric or top layer may be cut to a desired size and applied to a surface of the natural fiber mat or structural layer; the fabric may comprise at least one of (a) a top layer, (b) a non-woven fabric, (c) a synthetic fabric, (d) a thermoplastic fabric, (e) a fabric made of polypropylene fibers and polyester fibers. The top layer and the structural layer may be consolidated to form a panel assembly; the panel assembly may be compression formed to a desired shape to form a compression formed component; a cover material may be cut to a desired size to form a cover; the cover may be glued or press laminated to the compression formed component to form the vehicle interior component.

The invention is set out in the appended set of claims.

## Claims

1. A method of manufacturing a vehicle interior component (C) in a mold comprising a first surface and a second surface comprising:
- placing a pre-form substrate (PF) onto the first surface of the mold;
- forming a compression-formed structure (CF) from the pre-form substrate (PF) by compressing the pre-form substrate (PF) between the first surface of the mold and the second surface of the mold;
- applying a cover (T) to the compression-formed structure to form a panel assembly (P/C) providing a surface effect;
wherein the cover (T) comprises an exterior surface of the panel assembly (P/C) providing at least partially the surface effect of the panel assembly (PIC);
wherein the pre-form substrate (PF) comprises a substrate layer (BL) and a surface layer (SL/F), said surface layer (SL/F) comprising an area weight of between 200 grams per square meter and 300 grams per square meter; wherein the substrate layer (BL) comprises natural fibers and a resin; and wherein the surface layer (SL/F) comprises at least one of (a) a non-woven fabric; (b) a synthetic fabric; (c) a thermoplastic fabric; (d) a non-woven fiber fabric.

2. The method of Claim 1 wherein the compression-formed structure (CF) comprises the substrate layer (BL) and the surface layer (SL/F).

3. The method of Claim 2 wherein the substrate layer (BL) in the compression-formed structure (CF) comprises a generally rigid fiber mat.

4. The method of Claim 2 or 3 wherein the surface effect of the panel assembly (P/C) comprises a generally smooth surface effect of the surface layer (SL/F) of the compression-formed structure (CF) rather than a generally rough surface effect of the substrate layer for the pre-form substrate (PF).

5. The method of one of Claims 1 to 4 wherein the surface layer (SL/F) for the pre-form substrate (PF) comprises at least one of a fabric material or a fleece material.

6. The method of one of Claims 1 to 5 wherein the surface layer (SL/F) of the pre-form substrate (PF) comprises at least one of (a) a fabric; (b) a textile; (c) a fleece material; (d) a woven material; (e) a non-woven material; (f) a fiber-based material; (g) a textile material; (h) a woven sheet material; (i) a non-woven sheet material; (j) a fleece sheet material; (k) a resin-based material; (I) a polymer material; (m) polypropylene; (n) polyester.

7. The method of one of Claims 1 to 6 further comprising the step of forming the pre-form substrate (PF); wherein the step of forming the pre-form substrate (PF) comprises forming an interface between the surface layer (SL/F) and the substrate layer (BL) so that a surface effect of the pre-form substrate (PF) comprises a generally smooth surface effect of the surface layer (SL/F) rather than a generally rough surface effect of the substrate layer (BL).

8. The method of Claim 7 wherein forming the interface between the surface layer (SL/F) and the substrate layer (BL) comprises at least partial melting of the substrate layer (BL) into the surface layer(SL/F).

9. The method of Claim 7 or 8 wherein the step of forming the pre-form substrate (PF) comprises consolidating the surface layer (SL/F) and the substrate layer (BL) into a generally rigid form.

10. The method of one of Claims 1 to 9 wherein the preform substrate comprises an area weight of between 1000 grams per square meter and 1800 grams per square meter.

11. The method of any one of Claims 1 to 10 wherein the process comprises the steps of activating the surface layer (SL) and adhering the cover (T) to the surface layer (SL).

12. The method of any one of Claims 1 to 11 wherein the method comprises the step of injecting resin into the mold after the compression-formed structure (CF) is formed to form an ancillary component of the panel assembly (P/C)

13. A vehicle interior component (C) comprising:
- a panel assembly (P/C) providing a surface effect and comprising a
compression-formed structure (CF) and a cover(T);
wherein the cover (T) comprises an exterior surface of the panel assembly (P/C) providing at least partially the surface effect of the panel assembly (P/C);
wherein the compression-formed structure (CF) comprises a substrate layer (BL) and a surface layer (SL/F), said surface layer (SL/F) comprising an area weight of between 200 grams per square meter and 300 grams per square meter;
wherein the substrate layer (BL) comprises natural fibers and a resin; and wherein the surface layer (SL/F) comprises at least one of (a) a non-woven fabric; (b) a synthetic fabric; (c) a thermoplastic fabric; (d) a non-woven fiber fabric.

14. The component (C) of Claim 13 wherein the component (C) is produced in a mold comprising a first surface and a second surface by a process comprising:
- placing a pre-form substrate (PF) onto the first surface of the mold;
- forming a compression-formed structure (CF) from the pre-form substrate (PF) by compressing the pre-form substrate (PF) between the first surface of the mold and the second surface of the mold;
- applying a cover (T) to the compression-formed structure (CF) to form a panel assembly (P/C) providing a surface effect.

## Patentansprüche

1. Verfahren zur Herstellung einer Fahrzeuginnenraum-Komponente (C) in einer Form, die eine erste Oberfläche und eine zweite Oberfläche aufweist, welches Folgendes aufweist:
- Anordnen eines Vorformsubstrats (PF) auf der ersten Oberfläche der Form;
- Bilden einer druckgeformten Struktur (CF) aus dem Vorformsubstrat (PF) durch Komprimieren des Vorformsubstrats (PF) zwischen der ersten Oberfläche der Form und der zweiten Oberfläche der Form;
- Aufbringen einer Abdeckung (T) auf die druckgeformte Struktur, um eine Plattenanordnung (P/C) zu bilden, die einen Oberflächeneffekt ergibt;
wobei die Abdeckung (T) eine Außenfläche der Plattenanordnung (P/C) aufweist, die zumindest teilweise den Oberflächeneffekt der Plattenanordnung (P/C) bereitstellt;
wobei das Vorformsubstrat (PF) eine Substratschicht (BL) und eine Oberflächenschicht (SL/F) aufweist, wobei die Oberflächenschicht (SL/F) ein Flächengewicht zwischen 200 Gramm pro Quadratmeter und 300 Gramm pro Quadratmeter aufweist;
wobei die Substratschicht (BL) Naturfasern und ein Harz aufweist; und wobei die Oberflächenschicht (SL/F) mindestens einen der folgenden Stoffe aufweist: (a) ein nicht gewebtes Gewebe; (b) ein synthetisches Gewebe; (c) ein thermoplastisches Gewebe; (d) ein nicht gewebtes Fasergewebe.

2. Verfahren nach Anspruch 1, wobei die druckgeformte Struktur (CF) die Substratschicht (BL) und die Oberflächenschicht (SL/F) aufweist.

3. Verfahren nach Anspruch 2, wobei die Substratschicht (BL) in der druckgeformten Struktur (CF) eine im wesentlichen starre Fasermatte aufweist.

4. Verfahren nach Anspruch 2 oder 3, wobei der Oberflächeneffekt der Plattenanordnung (P/C) einen im wesentlichen glatten Oberflächeneffekt der Oberflächenschicht (SL/F) der druckgeformten Struktur (CF) und nicht einen im wesentlichen rauen Oberflächeneffekt der Substratschicht für das Vorformsubstrat (PF) aufweist.

5. Verfahren nach einem der Ansprüche 1 bis 4, wobei die Oberflächenschicht (SL/F) für das Vorformsubstrat (PF) mindestens eines von einem Gewebematerial oder einem Vliesmaterial aufweist.

6. Verfahren nach einem der Ansprüche 1 bis 5, wobei die Oberflächenschicht (SL/F) des Vorformsubstrats (PF) mindestens eines der folgenden Materialien aufweist: (a) ein Gewebe; (b) ein Textil; (c) ein Vliesmaterial; (d) ein gewebtes Material; (e) ein nicht gewebtes Material (f) ein Material auf Faserbasis; (g) ein textiles Material; (h) ein gewebtes Bahnmaterial; (i) ein nicht gewebtes Bahnmaterial; (j) ein Vliesbahnmaterial; (k) ein Material auf Harzbasis; (I) ein Polymermaterial; (m) Polypropylen; (n) Polyester.

7. Verfahren nach einem der Ansprüche 1 bis 6, das ferner den Schritt des Ausbildens des Vorformsubstrats (PF) aufweist, wobei der Schritt des Ausbildens des Vorformsubstrats (PF) das Ausbilden einer Grenzfläche zwischen der Oberflächenschicht (SL/F) und der Substratschicht (BL) aufweist, so dass ein Oberflächeneffekt des Vorformsubstrats (PF) eher einen im wesentlichen glatten Oberflächeneffekt der Oberflächenschicht (SL/F) als einen im wesentlichen rauen Oberflächeneffekt der Substratschicht (BL) aufweist.

8. Verfahren nach Anspruch 7, wobei das Ausbilden der Grenzfläche zwischen der Oberflächenschicht (SL/F) und der Substratschicht (BL) zumindest ein teilweises Einschmelzen der Substratschicht (BL) in die Oberflächenschicht (SL/F) aufweist.

9. Verfahren nach Anspruch 7 oder 8, wobei der Schritt des Bildens des Vorformsubstrats (PF) das Verfestigen der Oberflächenschicht (SL/F) und der Substratschicht (BL) zu einer im wesentlichen starren Form aufweist.

10. Verfahren nach einem der Ansprüche 1 bis 9, wobei das Vorformsubstrat ein Flächengewicht zwischen 1000 Gramm pro Quadratmeter und 1800 Gramm pro Quadratmeter aufweist.

11. Verfahren nach einem der Ansprüche 1 bis 10, wobei das Verfahren die Schritte des Aktivierens der Oberflächenschicht (SL) und des Aufklebens der Abdeckung (T) auf die Oberflächenschicht (SL) aufweist.

12. Verfahren nach einem der Ansprüche 1 bis 11, wobei das Verfahren den Schritt des Einspritzens von Harz in die Form aufweist, nachdem die druckgeformte Struktur (CF) geformt wurde, um eine Zusatzkomponente der Plattenanordnung (P/C) zu bilden.

13. Fahrzeuginnenraumkomponente (C), welches Folgends aufweist:
- eine Plattenanordnung (P/C), die einen Oberflächeneffekt bietet und
eine druckgeformte Struktur (CF) und eine Abdeckung (T) aufweist;
wobei die Abdeckung (T) eine Außenfläche der Plattenanordnung (P/C) aufweist, die zumindest teilweise den Oberflächeneffekt der Plattenanordnung (P/C) bereitstellt;
wobei die druckgeformte Struktur (CF) eine Substratschicht (BL) und eine Oberflächenschicht (SL/F) aufweist, wobei die Oberflächenschicht (SL/F) ein Flächengewicht zwischen 200 Gramm pro Quadratmeter und 300 Gramm pro Quadratmeter aufweist;
wobei die Substratschicht (BL) Naturfasern und ein Harz aufweist; und wobei die Oberflächenschicht (SL/F) mindestens einen der folgenden Stoffe aufweist: (a) ein nicht gewebtes Gewebe; (b) ein synthetisches Gewebe; (c) ein thermoplastisches Gewebe; (d) ein nicht gewebtes Fasergewebe.

14. Komponente (C) nach Anspruch 13, wobei die Komponente (C) in einer Form, die eine erste Oberfläche und eine zweite Oberfläche aufweist, durch ein Verfahren hergestellt wird, das Folgendes aufweist:
- Auflegen eines Vorformsubstrats (PF) auf die erste Oberfläche der Form;
- Bilden einer druckgeformen Struktur (CF) aus dem Vorformsubstrat (PF) durch Komprimieren des Vorformsubstrats (PF) zwischen der ersten Oberfläche der Form und der zweiten Oberfläche der Form;
- Aufbringen einer Abdeckung (T) auf die druckgeformte Struktur (CF), um eine Plattenanordnung (P/C) zu bilden, die einen Oberflächeneffekt ergibt.

## Revendications

1. Procédé de fabrication d'un composant (C) pour un intérieur de véhicule dans un moule comprenant une première surface et une seconde surface, comprenant les étapes consistant à :
- placer une ébauche de substrat (PF) jusque sur la première surface du moule ;
- former une structure formée par compression (CF) à partir de l'ébauche de substrat (PF) en comprimant l'ébauche de substrat (PF) entre la première surface du moule et la seconde surface du moule ;
- appliquer une couverture (T) sur la structure formée par compression pour former un assemblage de panneau (P/C) fournissant un effet de surface ;
dans lequel la couverture (T) comprend une surface extérieure de l'assemblage de panneau (P/C) fournissant au moins partiellement l'effet de surface de l'assemblage de panneau (P/C) ;
dans lequel l'ébauche de substrat (PF) comprend une couche de substrat (BL) et une couche de surface (SL/F), ladite couche de surface (SL/F) comprenant un poids surfacique entre 200 grammes par mètre carré et 300 grammes par mètre carré ;
dans lequel la couche de substrat (BL) comprend des fibres naturelles et une résine ; et
dans lequel la couche de surface (SL/F) comprend au moins un élément parmi (a) une étoffe non-tissée ; (b) une étoffe synthétique ; (c) une étoffe thermoplastique ; (d) une étoffe de fibres non-tissée.

2. Procédé selon la revendication 1,
dans lequel la structure formée par compression (CF) comprend la couche de substrat (BL) et la couche de surface (SL/F).

3. Procédé selon la revendication 2,
dans lequel la couche de substrat (BL) dans la structure formée par compression (CF) comprend une natte de fibres généralement rigide.

4. Procédé selon la revendication 2 ou 3,
dans lequel l'effet de surface sur l'assemblage de panneau (P/C) comprend un effet de surface généralement lisse de la couche de surface (SL/F) de la structure formée par compression (CF) plutôt qu'un effet de surface généralement rugueux de la couche de substrat pour l'ébauche de substrat (PF).

5. Procédé selon l'une des revendications 1 à 4,
dans lequel la couche de surface (SL/F) pour l'ébauche de substrat (PF) comprend l'un au moins d'un matériau en étoffe ou d'un matériau en molleton.

6. Procédé selon l'une des revendications 1 à 5,
dans lequel la couche de surface (SL/F) de l'ébauche de substrat (PF) comprend au moins un élément parmi (a) une étoffe ; (b) un textile ; (c) un matériau en molleton ; (d) un matériau tissé ; (e) un matériau non-tissé ; (f) un matériau à base de fibres ; (g) un matériau textile ; (h) un matériau en feuille tissé ; (i) un matériau en feuille non-tissé ; (j) un matériau en feuille en molleton ; (k) un matériau à base de résine ; (1) un matériau polymère ; (m) un polypropylène ; (n) un polyester.

7. Procédé selon l'une des revendications 1 à 6,
comprenant en outre l'étape consistant à former l'ébauche de substrat (PF) ; dans lequel l'étape consistant à former l'ébauche de substrat (PF) comprend de former une interface entre la couche de surface (SL/F) et la couche de substrat (BL) de telle sorte qu'un effet de surface de l'ébauche de substrat (PF) comprend un effet de surface généralement lisse de la couche de surface (SL/F) plutôt qu'un effet de surface généralement rugueux de la couche de substrat (BL).

8. Procédé selon la revendication 7,
dans lequel l'étape consistant à former l'interface entre la couche de surface (SL/F) et la couche de substrat (BL) comprend de faire fondre au moins partiellement la couche de substrat (BL) jusque dans la couche de surface (SL/F).

9. Procédé selon la revendication 7 ou 8,
dans lequel l'étape consistant à former l'ébauche de substrat (PF) comprend de consolider la couche de surface (SL/F) et la couche de substrat (BL) pour obtenir une forme généralement rigide.

10. Procédé selon l'une des revendications 1 à 9,
dans lequel l'ébauche de substrat comprend un poids surfacique entre 1 000 grammes par mètre carré et 1 800 grammes par mètre carré.

11. Procédé selon l'une des revendications 1 à 10,
dans lequel le procédé comprend les étapes consistant à activer la couche de surface (SL) et à faire adhérer la couverture (T) sur la couche de surface (SL).

12. Procédé selon l'une des revendications 1 à 11,
dans lequel le procédé comprend l'étape consistant à injecter une résine jusque dans le moule après formage de la structure formée par compression (CF) pour former un composant subsidiaire de l'assemblage de panneau (P/C).

13. Composant (C) pour un intérieur de véhicule, comprenant :
- un assemblage de panneau (P/C) fournissant un effet de surface et comprenant une structure formée par compression (CF) et une couverture (T) ;
dans lequel la couverture (T) comprend une surface extérieure de l'assemblage de panneau (P/C) fournissant au moins partiellement l'effet de surface de l'assemblage de panneau (P/C) ;
dans lequel la structure formée par compression (CF) comprend une couche de substrat (BL) et une couche de surface (SL/F), ladite couche de surface (SL/F) comprenant un poids surfacique entre 200 grammes par mètre carré et 300 grammes par mètre carré ;
dans lequel la couche de substrat (BL) comprend des fibres naturelles et une résine ; et
dans lequel la couche de surface (SL/F) comprend au moins un élément parmi (a) une étoffe non-tissée ; (b) une étoffe synthétique ; (c) une étoffe thermoplastique ; (d) une étoffe de fibres non-tissée.

14. Composant (C) selon la revendication 13,
dans lequel le composant (C) est produit dans un moule comprenant une première surface et une seconde surface via un procédé comprenant les étapes consistant à :
- placer une ébauche de substrat (PF) jusque sur la première surface du moule ;
- former une structure formée par compression (CF) à partir de l'ébauche de substrat (PF) en comprimant l'ébauche de substrat (PF) entre la première surface du moule et la seconde surface du moule ;
- appliquer une couverture (T) sur la structure formée par compression (CF) pour former un assemblage de panneau (P/C) fournissant un effet de surface.
